# EUROPEAN PATENT APPLICATION

(11) **EP 4 793 941 A1**
(43) Date of publication of application: **19.08.2026**
(21) Application number: 25305211.2
(22) Date of filing: 18.02.2025
(51) Int. Cl.: G10L 15/08

(54) **VOICE RECOGNITION**

(71) Applicant: NXP B.V., 5656 AG Eindhoven (NL)
(72) Inventor: CHEREAU, Sebastien, 06560 Vabonne (FR); VALENTI, Giacomo, 06560 Valbonne (FR); CAMIER, Thomas, 06560 Valbonne (FR); MALTESE, Salome, 06250 Mougins (FR)
(74) Representative: Schwarzweller, Thomas

(57) **Abstract**

The disclosure relates to a computer-implemented voice recognition method and system, in which an audio signal (104) is provided to an acoustic model (100), processed to determine phonemes (202) from the audio signal (104), which are provided to a decoding graph (201) comprising a plurality of search paths corresponding to sequences of phonemes and an output (203) from the decoding graph (201) determined according to one of the plurality of search paths, wherein the plurality of search paths in the decoding graph (201) comprises a plurality of command search paths defining a plurality of sequences of phonemes for a respective plurality of voice commands and a watermark search path defining a sequence of phonemes for a watermark of the decoding graph (201).

## Description

### Field

The disclosure relates to a voice recognition method and system.

### Background

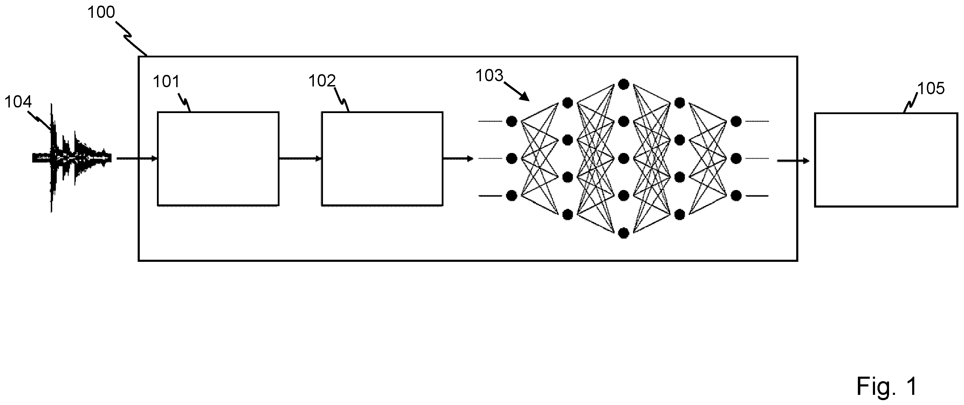

Voice recognition systems can be structured either as a full neural network or as a hybrid system. A hybrid voice recognition system integrates an acoustic model with a neural network language model that is implemented as a decoding graph. The acoustic model classifies speech frames from an input audio signal by computing for each frame a probability that the frame represents one of a plurality of possible sound segments, also termed phonemes or sub-phonemes. Figure 1 illustrates schematically an example arrangement of an acoustic model 100 for transforming an audio input signal 104 to a processed output. The acoustic model 100 comprises an audio feature processing unit 101, an audio feature conditioning unit 102 and a neural network 103. The audio feature processing unit 101 transforms the audio input signal 104 from the time domain to a form that is more suitable for machine learning, for example a spectral representation or the result of a transformation such as Mel-frequency Cepstral Coefficients (MFCCs), which represents the audio input signal 104 as a short-term power spectrum. The audio feature conditioning unit 102 may normalize the transformed signal, for example by cepstral mean and variance normalization (CMVN). The audio feature processing unit 101 and audio feature conditional unit 102 are commonly used in speech signal processing systems.

An audio input signal 104 is provided to the audio feature processing unit 101, which outputs a processed audio signal to the audio feature conditioning unit 102. The audio feature conditioning unit 102 provides a conditioned audio signal to the neural network 103, which outputs acoustic word embeddings 105 based on the input audio signals, the embeddings 105 being representations of speech segments or sub-phonemes in context. The embeddings 105 represent the probabilities of particular phonemes in context, given that a phoneme can appear differently depending on which phoneme precedes or follows it. The embeddings 105 are then input to a decoding graph, which defines search paths covering all possible sequences of sub-phonemes in the model.

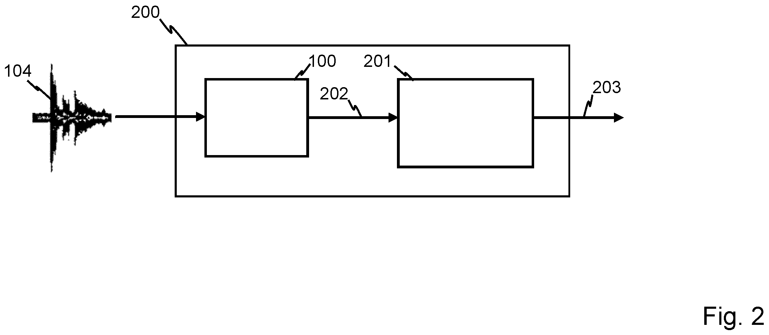

Figure 2 represents schematically a voice recognition system 200 comprising the acoustic model 100 and a decoding graph 201. The audio signal 104 is processed by the acoustic model 100 and outputs representative sub-phonemes 202 based on the audio signal 104 to the decoding graph 201. The decoding graph 201 provides an output 203 based on the sub-phonemes 202 according to search paths defined in the decoding graph 201. The output 203 may for example comprise a transcript of a command word or phrase in the audio signal 104, which can be provided to another component for further processing.

A problem with existing voice recognition systems is that developing a system for a given application is an expensive process, while a system once developed is relatively simple to copy and reproduce. It would therefore be advantageous to be able to easily identify the origin and owner of a voice recognition system to enable unauthorised copies to be detected.

### Summary

According to a first aspect there is provided a computer-implemented voice recognition method, comprising: providing an audio signal to an acoustic model; processing the audio signal by the acoustic model to determine phonemes from the audio signal; providing the phonemes output from the acoustic model to a decoding graph comprising a plurality of search paths corresponding to sequences of phonemes; determining an output from the decoding graph according to one of the plurality of search paths; and providing the output, wherein the plurality of search paths in the decoding graph comprises a plurality of command search paths defining a plurality of sequences of phonemes for a respective plurality of voice commands and a watermark search path defining a sequence of phonemes for a watermark of the decoding graph.

The output from the decoding graph may comprise a command if the audio signal comprises a sequence of phonemes corresponding to one of the plurality of command search paths.

The output from the decoding graph may comprise an indication of the presence of a watermark in the decoding graph if the audio signal comprises a sequence of phonemes corresponding to the watermark search path. The indication of the presence of the watermark may be provided as an audio or visual output. The watermark may identify an owner or creator of the decoding graph, for example an owner of copyright subsisting in the decoding graph.

The watermark may comprise one or more words, for example a single word or a sequence of words.

The watermark search path and plurality of command search paths may be nonoverlapping, i.e. none of the plurality of command search paths define a sequence of phonemes that corresponds to the watermark search path.

According to a second aspect there is provided a voice recognition system comprising: an acoustic model having an input for receiving an audio signal and configured to process the audio signal to determined phonemes from the audio signal; and a decoding graph arranged to receive the phonemes from the acoustic model and comprising a plurality of search paths corresponding to sequences of phonemes, the decoding graph configured to provide an output according to one of the plurality of search paths corresponding to the phonemes received from the acoustic model, wherein the plurality of search paths in the decoding graph comprises a plurality of command search paths defining a plurality of sequences of phonemes for a respective plurality of voice commands and a watermark search path defining a sequence of phonemes for a watermark of the decoding graph.

The output from the decoding graph may comprise a command if the audio signal comprises a sequence of phonemes corresponding to one of the plurality of command search paths.

The output from the decoding graph may comprise an indication of the presence of a watermark in the decoding graph if the audio signal comprises a sequence of phonemes corresponding to the watermark search path. The system may be configured to provide the indication of the presence of the watermark as an audio or visual output. The watermark may identify an owner or creator of the decoding graph, for example an owner of copyright subsisting in the decoding graph.

The watermark may comprise one or more words, for example a single word or a sequence of words.

The watermark search path and plurality of command search paths may be nonoverlapping, i.e. none of the plurality of command search paths define a sequence of phonemes that corresponds to the watermark search path.

According to a third aspect there is provided a computer program comprising instructions to cause a computer processor of a computer-implemented voice recognition system to perform the method according to the first aspect.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a non-transitory computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic diagram of an example acoustic model for classifying speech frames;
Figure 2 is a schematic diagram of an example voice recognition system;
Figure 3 is a schematic representation of a decoding graph;
Figure 4 is a flow diagram illustrating an example computer-implemented voice recognition method;
Figure 5 is a flow diagram illustrating an example method of generating a decoding graph; and
Figure 6 is a schematic diagram of an example device for implementing a voice recognition system.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

The present disclosure provides a solution to the problem of identifying the origin of a decoding graph by integrating a watermark in the decoding graph. The watermark may be integrated at the training stage for a full neural network solution. An advantage of using a hybrid approach is that the same acoustic model can be used over multiple platforms. The decoding graph can be distributed on demand and under a copyright licence. Authorised use of the decoding graph can be confirmed through a specific prompt that causes the decoding graph to output an indication of the watermark being present. The output may indicate the owner or creator, i.e. the copyright holder, of the decoding graph.

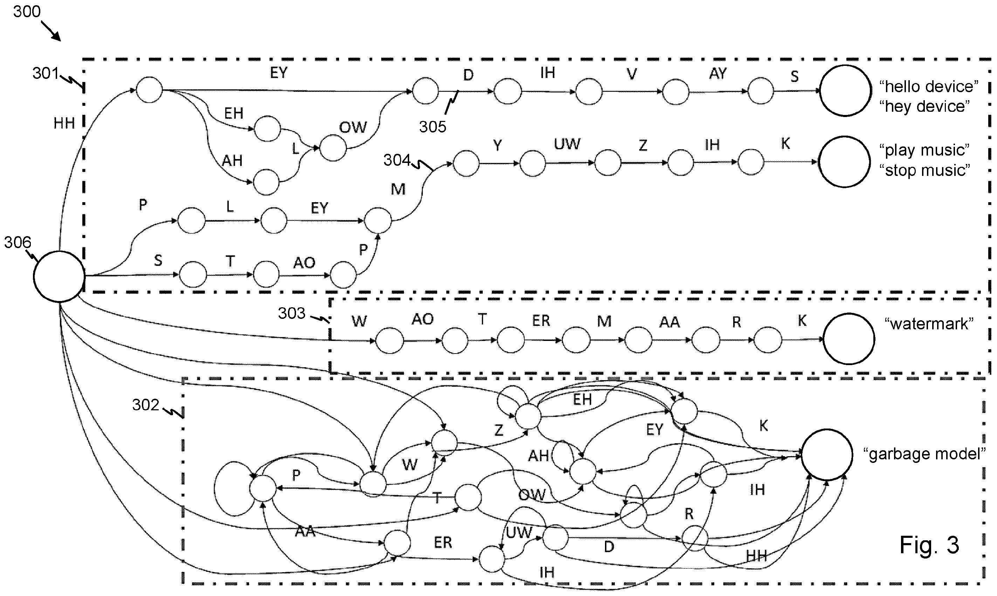

Figure 3 illustrates an example decoding graph 300 for use with an acoustic model in a voice recognition system of the type described above. The voice recognition system may for example be used in different types of devices such as a media player, lighting system, oven, air conditioning unit and other types of devices where voice control may be beneficial.

The decoding graph 300 is represented in Figure 3 as comprising a language model 301, a garbage model 302 and a watermark path 303. The garbage model 302 defines in effect an alternative hypothesis to the language model, comprising other sequences of phonemes which correspond to real words in the target language and are not part of a wake-word or command list.

The language model 301 contains a plurality of search paths 304, 305 that each represent a voice command. A few selected voice commands are illustrated in the search paths in Figure 3. In a practical implementation, the language model 301 will comprise many more paths. Each search path defines a sequence of phonemes that together represent a particular voice command. Search paths with common sequences of phonemes may be merged into branched search paths. A first search path 304 in the language model 301 of Figure 3 represents two sequences of phonemes that represent the voice commands "play music" and "stop music". The phonemes making up these commands have the word "music" in common, represented by the phonemes "M", "Y", "UW", "Z", "IH" and "K", while the word "play" is represented by the sequence of phonemes "P", "L" and "EY", and the word "stop" is represented by the sequence of phonemes "S", "T", "AO" and "P". Similarly, in a second search path 305, sequences of phonemes together represent the voice commands "hello/hallo device" and "hey device".

The language model 301 operates by selecting a path from a starting point 306 according to a sequence of phonemes output from the acoustic model. The first path 304 is selected if the first phoneme is either "P" or "S", while the second path 305 is selected if the first phoneme is "HH". If all the phonemes in a particular search path are selected according to a particular path, the end result is output as a voice command, which can then be used to cause an action.

The watermark path 303 is an additional path to those in the language model 301. The watermark path 303 is separate from the paths 304, 305 in the language model 301 and does not overlap with any of the voice commands represented by the language model 301, i.e. the particular sequence of phonemes in the watermark path 303 is not present in any of the paths 304, 305 in the language model 301. In this example, the watermark path 303 represents the voice command "watermark" by the sequence of phonemes "W', "AO", "T", "ER", "M", "AA", "R" and "K". The specific voice command, or pass phrase, for the watermark path 303 can, however, be any other word or sequence of words that does not overlap with any of the voice commands represented by the language model 301. The pass phrase may for example be a word or phrase that does not have any other specific meaning in the language used for the language model 301. The decoding graph processes input sequences of phonemes through the watermark path 303 and the language model 301 jointly in order to minimize the acoustic likelihood between the pass phrase and voice commands in the language model 301. The addition of the watermark path 303 does not therefore affect the fidelity of the decoding graph 300 and preserves the accuracy of the voice recognition system.

The watermark path 303 requires only a small amount of additional memory to be added to the decoding graph, typically only a few bytes. In a typical implementation, the watermark path 303 is embedded and effectively hidden within the decoding graph 300. Its presence is therefore generally undetectable, as well as being in practice inseparable from the other paths of the decoding graph 300.

The garbage model 302 of the decoding graph 300 represents sequences of phonemes that are outside the vocabulary of the language model 301 and the watermark path 303.

If a specific pass phrase is provided to the decoding graph 300 comprising a sequence of phonemes that matches the sequence defined by the watermark path 303, the decoding graph provides an output indicating the presence of the watermark. This output can, for example, trigger an output on a display or a speaker that identifies the origin of the voice recognition system, i.e. the IP (copyright) owner of the decoding graph.

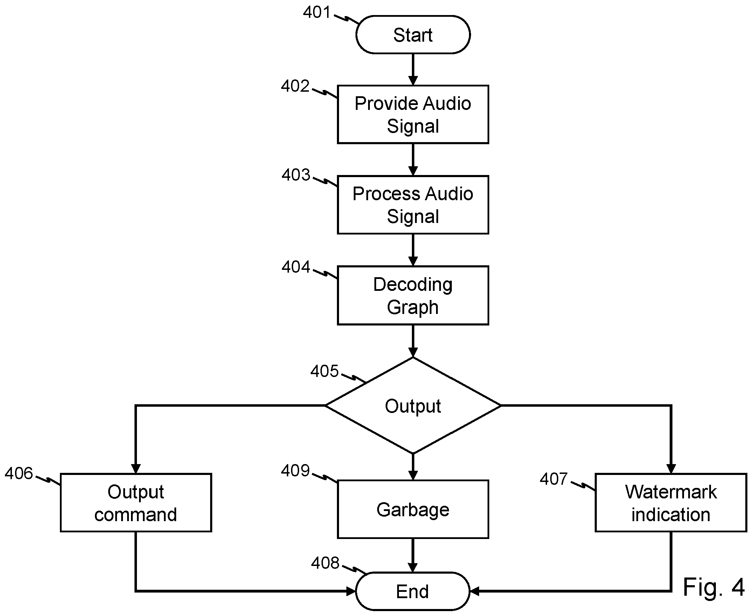

Figure 4 is a flow diagram that illustrates schematically an example computer-implemented voice recognition method. The method starts at step 401 and an audio signal is provided at step 402 to an acoustic model, i.e. the acoustic model 100 described above. The audio signal may be provided from a microphone or may be provided by a pre-recorded or pre-generated audio signal file. At step 403, the audio signal is processed by the acoustic model to determine phonemes from the audio signal. The phonemes output from the acoustic model are provided at step 404 to a decoding graph 300 (Figure 3), which comprises a plurality of search paths corresponding to sequences of phonemes. If, at step 405, the phonemes correspond to a path defining a sequence of phonemes in the language model 301, an output command is provided at step 406. If the sequence of phonemes corresponds to the watermark path 303, a watermark indication is provided at step 407. If the sequence of phonemes corresponds to neither the language model 301 not the watermark path 303, the garbage model 302 applies, which may result in no action being taken or an error indication being output. The process then ends at step 408. The process may then repeat for processing a further voice command.

The decoding graph may be built based on a target word list and a desired watermark. In a first approach, the user may select their own watermark comprising one or more words distinct from the target word list. In a second approach, the watermarked sequence can be statically defined as a phoneme sequence with no actual meaning in the targeted language, which will therefore apply to any desired target word list. Using a non-existing word as the watermark sequence ensures that it will never coincide with a word or command in the target word list. In a third approach, an optimal watermark sequence may be determined by considering the target word list and ensuring that the phoneme sequence of the key word for the watermark output is as far as possible from all words in the target list. The key word may for example have no meaning in the selected language. In each of these possible approaches, the phoneme sequence of the watermark path will also not be part of the garbage model.

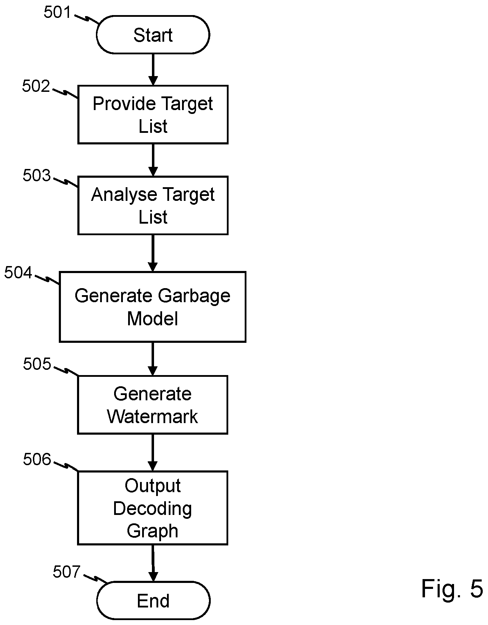

Figure 5 is a flow diagram that illustrates schematically a method according to the above third approach for generating a decoding graph. The method starts at step 501 and a target list is provided at step 502. The target list is analysed at step 503, which includes determining the phoneme sequences making up the target vocabulary for the language model. In step 504, a garbage model is generated using words not in the language model and sequences of phonemes with an acoustic likelihood of distance from the target vocabulary. This acoustic distance may be adjusted to minimize false positives (in which the garbage model acoustically close to the target vocabulary) or to maximize true positives (in which the garbage model is acoustically far from the target vocabulary). At step 505 the watermark is generated, which comprises taking a sequence of phonemes that is different than those in both the language and garbage models that corresponds to a word or a sequence of words in the outside vocabulary.

To detect a watermark, the pass phrase for the watermark is spoken or an audio file containing the pass phrase may be provided to the voice recognition system. If the pass phrase matches the watermark path in the decoding graph, the system provides an output that notifies the user that the watermark has been detected.

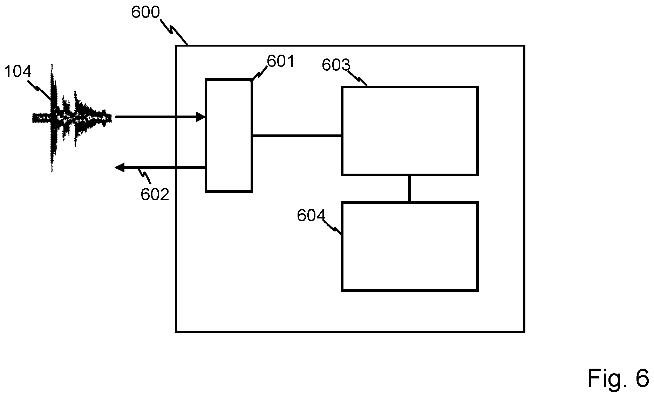

Figure 6 is a schematic diagram of an example device 600 incorporating a voice recognition system according to the present disclosure. The device 600 comprises an input-output interface 601 for receiving an audio signal 104, for example via a microphone or an audio line input. The input-output interface 601 also provides an output signal 602, which may be provided to a speaker or a display screen. The input-output interface 601 is connected to a processor 603, which processes the input audio signal and implements the acoustic model and decoding graph, which are retrieved from a memory 604. The processor 603 implements the method as described above in response to receiving an audio signal 104 via the input-output interface 601.

A system and method according to the present disclosure enables a simple and lightweight process that does not require a complex audio generation system to create the voice watermark sequence, since a human voice or computer-generated input is sufficient. In the present disclosure, the acoustic model is not affected and thus performance of the phoneme extraction engine is maintained. The accuracy of the system is not affected since the watermark keyword or pass phrase is selected to be phonetically far from the target word list.

An advantage of the system and method described herein in which watermark detection is integrated in the decoding graph is that the watermark protection does not significantly impact the performance of the recognition system, unlike where a watermark is integrated in the neural network.

From reading the present disclosure, other variations and modifications will be apparent to the skilled person. Such variations and modifications may involve equivalent and other features which are already known in the art of voice recognition systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A computer-implemented voice recognition method, comprising:
providing (402) an audio signal (104) to an acoustic model (100);
processing (403) the audio signal (104) by the acoustic model (100) to determine phonemes (202) from the audio signal (104);
providing (404) the phonemes (202) output from the acoustic model (100) to a decoding graph (201) comprising a plurality of search paths corresponding to sequences of phonemes;
determining (405) an output from the decoding graph (201) according to one of the plurality of search paths; and
providing (406, 407) the output,
wherein the plurality of search paths in the decoding graph (201) comprises a plurality of command search paths defining a plurality of sequences of phonemes for a respective plurality of voice commands and a watermark search path defining a sequence of phonemes for a watermark of the decoding graph (201).

2. The voice recognition method of claim 1, wherein the output from the decoding graph (201) comprises a command if the audio signal (104) comprises a sequence of phonemes corresponding to one of the plurality of command search paths.

3. The voice recognition method of claim 1 or claim 2, wherein the output from the decoding graph (201) comprises an indication of the presence of a watermark in the decoding graph (201) if the audio signal (104) comprises a sequence of phonemes corresponding to the watermark search path.

4. The voice recognition method of claim 3, wherein the indication of the presence of the watermark is provided as an audio or visual output.

5. The voice recognition method of any preceding claim, wherein the watermark identifies an owner or creator of the decoding graph.

6. The voice recognition method of any preceding claim, wherein the watermark comprises one or more words.

7. The voice recognition method of any preceding claim, wherein the watermark search path and plurality of command search paths are nonoverlapping.

8. A voice recognition system (200) comprising:
an acoustic model (100) having an input for receiving an audio signal (104) and configured to process the audio signal (104) to determined phonemes (202) from the audio signal (104); and
a decoding graph (201) arranged to receive the phonemes (202) from the acoustic model (100) and comprising a plurality of search paths corresponding to sequences of phonemes, the decoding graph configured to provide an output according to one of the plurality of search paths corresponding to the phonemes received from the acoustic model (100),
wherein the plurality of search paths in the decoding graph (201) comprises a plurality of command search paths (304, 305) defining a plurality of sequences of phonemes for a respective plurality of voice commands and a watermark path (303) defining a sequence of phonemes for a watermark of the decoding graph (201).

9. The voice recognition system (200) of claim 8, wherein the output from the decoding graph (201) comprises a command if the audio signal (104) comprises a sequence of phonemes corresponding to one of the plurality of command search paths.

10. The voice recognition system (200) of claim 8 or claim 9, wherein the output from the decoding graph (201) comprises an indication of the presence of a watermark in the decoding graph (201) if the audio signal (104) comprises a sequence of phonemes corresponding to the watermark search path.

11. The voice recognition system (200) of claim 10, wherein the system (200) is configured to provide the indication of the presence of the watermark as an audio or visual output.

12. The voice recognition system (200) of any one of claims 8 to 11, wherein the watermark identifies an owner or creator of the decoding graph (201).

13. The voice recognition system (200) of any one of claims 8 to 12, wherein the watermark comprises one or more words.

14. The voice recognition system (200) of any one of claims 8 to 13, wherein the watermark search path and plurality of command search paths are nonoverlapping.

15. A computer program for causing a computer processor (603) of a computer-implemented voice recognition system (200) to perform the method according to any one of claims 1 to 7.

## Amended claims

### Amended claims in accordance with Rule 137(2) EPC.

1. A computer-implemented voice recognition method, comprising:
providing (402) an audio signal (104) to an acoustic model (100);
processing (403) the audio signal (104) by the acoustic model (100) to determine phonemes (202) from the audio signal (104);
providing (404) the phonemes (202) output from the acoustic model (100) to a decoding graph (201) comprising a plurality of search paths corresponding to sequences of phonemes;
determining (405) an output from the decoding graph (201) according to one of the plurality of search paths; and
providing (406, 407) the output,
wherein the plurality of search paths in the decoding graph (201) comprises a language model (301) with a plurality of command search paths (304, 305) defining a plurality of sequences of phonemes for a respective plurality of voice commands, a garbage model (302) defining other sequences of phonemes that are not part of the language model (301) and **characterized by** a watermark search path (303) defining a sequence of phonemes for a watermark of the decoding graph (201) that corresponds to a word or sequence of words in an outside vocabulary that is different than those in both the language and garbage models (301, 302).

2. The voice recognition method of claim 1, wherein the output from the decoding graph (201) comprises a command if the audio signal (104) comprises a sequence of phonemes corresponding to one of the plurality of command search paths.

3. The voice recognition method of claim 1 or claim 2, wherein the output from the decoding graph (201) comprises an indication of the presence of a watermark in the decoding graph (201) if the audio signal (104) comprises a sequence of phonemes corresponding to the watermark search path.

4. The voice recognition method of claim 3, wherein the indication of the presence of the watermark is provided as an audio or visual output.

5. The voice recognition method of any preceding claim, wherein the watermark identifies an owner or creator of the decoding graph.

6. A voice recognition system (200) comprising:
an acoustic model (100) having an input for receiving an audio signal (104) and configured to process the audio signal (104) to determined phonemes (202) from the audio signal (104); and
a decoding graph (201) arranged to receive the phonemes (202) from the acoustic model (100) and comprising a plurality of search paths corresponding to sequences of phonemes, the decoding graph configured to provide an output according to one of the plurality of search paths corresponding to the phonemes received from the acoustic model (100),
wherein the plurality of search paths in the decoding graph (201) comprises a language model (301) with a plurality of command search paths (304, 305) defining a plurality of sequences of phonemes for a respective plurality of voice commands, a garbage model (302) defining other sequences of phonemes that are not part of the language model (301) and **characterised by** a watermark path (303) defining a sequence of phonemes for a watermark of the decoding graph (201) that corresponds to a word or sequence of words in an outside vocabulary that is different than those in both the language and garbage models (301, 302).

7. The voice recognition system (200) of claim 6, wherein the output from the decoding graph (201) comprises a command if the audio signal (104) comprises a sequence of phonemes corresponding to one of the plurality of command search paths.

8. The voice recognition system (200) of claim 6 or claim 7, wherein the output from the decoding graph (201) comprises an indication of the presence of a watermark in the decoding graph (201) if the audio signal (104) comprises a sequence of phonemes corresponding to the watermark search path.

9. The voice recognition system (200) of claim 8, wherein the system (200) is configured to provide the indication of the presence of the watermark as an audio or visual output.

10. The voice recognition system (200) of any one of claims 6 to 9, wherein the watermark identifies an owner or creator of the decoding graph (201).

11. A computer program for causing a computer processor (603) of a computer-implemented voice recognition system (200) to perform the method according to any one of claims 1 to 5.
